# DEMANDE DE BREVET EUROPEEN

(11) **EP 3 569 109 A1**
(43) Date de publication de la demande: **20.11.2019**
(21) Numéro de dépôt: 19173581.0
(22) Date de dépôt: 09.05.2019
(51) Int. Cl.: A47F 7/024, E05D 1/02, F16B 5/00, B65D 21/02, A47B 96/20

(54) **BOÎTIER PUZZLE DE STOCKAGE OU D'EMBALLAGE**

(30) Priorité: 13.05.2018 FR 1870553
(71) Demandeur: Ouarab, Yazid, 75012 Paris (FR)
(72) Inventeur: Ouarab, Yazid, 75012 Paris (FR)
(74) Mandataire: Marconnet, Sébastien

(57) **Abrégé**

Boîtier pour disque CD , DVD, VCD ou BD, qui peut être assemblé à d'autres boîtiers similaires à la façon d'un puzzle classique en deux dimensions ou trois dimensions caractérisé en ce qu'il comporte un corps de boîtier (1) contenant une rosace (5), d'un couvercle relié au corps de boîtier (8), d'un cadre relié au corps de boîtier au niveau de son périmètre lui donnant sa forme (2). Le boîtier réalisable en plastique injecté d'une pièce dispose d'un premier moyen (3a, 3b) d'assemblage permettant d'assembler plusieurs boîtiers en deux dimensions. Et d'un deuxième moyen d'assemblage en trois dimensions caractérisé en ce que le cadre possède au moins une charnière intégrée (4) parallèle à un de ses côtés permettant le pivotement du bord du côté du cadre par rapport au corps de boîtier. Le dispositif selon l'invention est particulièrement destiné aux éditeurs de disques, aux distributeurs, au rangement domestique.

## Description

### Domaine technique

La présente invention concerne une nouvelle conception de boîtier de stockage ou d'emballage de disque CD (Compact Disc) ou DVD (Digital Versatile Disc) ou de VCD (Vidéo Compact Disc) ou BD (Blu-ray) qui peut être assemblé à d'autres boîtiers similaires comme des pièces d'un puzzle classique en deux dimensions ou trois dimensions. Dans une forme de réalisation particulière, l'invention peut être un présentoir pour un grand nombre de produits.

### Technique antérieure

En grande distribution ou en magasin, le graphisme des couvercles des boîtiers de CD ou de DVD ou de VCD ou de BD n'est pas mis en valeur le plus souvent par manque de place dans les rayons ou de présentoirs adaptés. Il en est de même pour le rangement domestique de ces produits. Plus généralement, ces inconvénients se posent pour un grand nombre de produits mis en vente et particulièrement pour les collections de coffrets d'artistes, de films ou de jeux. Certains dispositifs ont été envisagés tel que décrits dans les documents US5603415A et EP1049091A2 mais sans y apporter de réelles solutions, en revanche l'invention décrite ci-après permet de solutionner ces inconvénients.

### Résumé de l'invention

Le dispositif selon l'invention permet de remédier à ces inconvénients. Il comporte en effet les caractéristiques suivantes :
Un corps de boîtier qui peut être de dimensions variables et qui contient une rosace en son centre pour la fixation d'un CD ou DVD ou VCD ou BD.

Un couvercle relié au corps de boîtier par un mécanisme de charnière moulée ou à l'aide de deux ergots aux bordures du couvercle ou du corps du boîtier.

Un cadre relié au corps de boîtier au niveau de son périmètre, de forme et de dimensions variables qui donne sa forme au boîtier.

Un premier moyen d'assemblage en deux dimensions caractérisé en ce que le tracé du contour extérieur du cadre relié au corps de boîtier possède des concavités et des convexités réalisées de telle sorte que les parties mâles sont de formes différentes ou identiques mais identiques à leur parties femelles respectives d'un autre boîtier permettant un assemblage de manière fixe et étroitement ajustés entre deux boîtiers comme deux pièces d'un puzzle classique. L'assemblage peut se faire dans la longueur ou dans la largeur du boîtier, et ce, à l'infini. Les boîtiers peuvent ainsi être assemblés et désassemblés à volonté comme avec les pièces d'un puzzle classique.

Un deuxième moyen d'assemblage en trois dimensions caractérisé en ce que le cadre relié au corps de boîtier possède au moins une charnière intégrée parallèle à un de ses côtés permettant le pivotement du bord du côté du cadre par rapport au corps de boîtier et de former en fonction du besoin d'assemblage un angle entre 0° à 180° entre le bord du côté du cadre et le corps du boîtier. Le premier et le deuxième moyen d'assemblage permettent d'assembler deux boîtiers et de les agencer dans l'espace de manière à former un angle entre 0° à 180°entre deux boîtiers. Ces deux moyens permettent de créer un ensemble de boîtiers étroitement assemblés formant diverses compositions en trois dimensions tel qu'une tour polygonale.

Selon des modes particuliers de réalisation du dispositif :
Le cadre relié au corps de boîtier peut possède plusieurs charnières intégrées avec un maximum de charnières intégrés équivalent au nombre de ses côtes.

Le premier moyen d'assemblage peut être une rainure en Vé ou en Té pour la partie femelle et une languette en Vé ou en Té pour la partie mâle assurant une liaison glissière ou bien toutes autres formes permettant à un boîtier de s'assembler de manière fixe et étroitement ajusté à un autre boîtier similaire dans sa longueur ou dans sa largeur.

Le cadre relié au corps de boîtier peut comporter un évidement sur l'une de ses bordures internes permettant d'ouvrir aisément le couvercle.

Le cadre relié au corps de boîtier peut comporter à son dos une cavité afin de pouvoir accrocher le dispositif à une surface verticale comme un cadre classique.

Le contour extérieur du corps de boîtier ou du cadre relié au corps de boîtier peut être de formes géométriques variées ou représentant un polygone.

Les surfaces évidées des bords du cadre relié au corps de boîtier qui forment le tracé du contour extérieur du cadre (languettes ou rainures ou concavités ou convexités) peuvent être comblées par des pièces de la forme des surfaces évidées pour obtenir des côtés droits au niveau du contour extérieur du cadre ou pour modifier le tracé du contour extérieur du cadre ou pour servir de pièce intermédiaire entre deux boîtier.

Le dispositif peut contenir dans sa masse des ergots ou des trous permettant de fixer des pièces de décoration tels que des stickers, des formes en reliefs ou des éléments de promotion.

Selon une variante de l'invention, le dispositif est caractérisé en ce que le dispositif destiné à recevoir un boîtier classique de CD ou de DVD ou de VDC ou de BD ne posséder pas de couvercle relié au corps de boîtier ni de rosace au centre du corps de boîtier. Ce mode de réalisation permet l'utilisation des boîtiers de disque ne possédant pas les moyens d'assemblage en deux ou trois dimensions du dispositif selon l'invention.

Selon une autre variante de l'invention, le dispositif est caractérisé en ce que le dispositif destiné à la fonction de présentoir d'objets ne possède pas de couvercle relié au corps de boîtier, ni de rosace au centre du corps de boîtier et que le corps de boîtier est plein sur lequel est fixé un plateau amovible ou fixe. Les dimensions du plateau et des autres éléments du dispositif sont adaptées aux dimensions de l'objet à exposer. Ce mode de réalisation est particulièrement adapté pour la fonction de présentoir d'objets.

Quel que soit le mode de réalisation du dispositif, les boîtiers peuvent être assemblés en deux ou trois dimensions et désassemblés à volonté comme avec les pièces d'un puzzle classique.

Dans sa forme de réalisation préférée le dispositif peut être réalisé en plastique injecté d'une pièce.

Plus précisément, l'invention a pour objet un dispositif qui concerne une nouvelle conception d'un boîtier de stockage ou d'emballage de disque CD ou DVD ou VCD ou BD qui peut être assemblé à d'autres boîtiers similaires comme des pièces d'un puzzle classique en deux dimensions ou trois dimensions caractérisé en ce qu'il comporte :
- un corps du boîtier qui peut être de dimensions variables,
- un cadre relié au corps du boîtier au niveau de son périmètre, de forme et de dimensions variables qui donne la forme au dispositif,
- un premier moyen d'assemblage en deux dimensions comportant des parties femelles et des parties mâles réalisées suivant le tracé d'un contour extérieur du cadre, de telle sorte que les parties mâles sont de formes différentes ou identiques mais de forme complémentaire à leur parties femelles respectives d'un autre boîtier permettant un assemblage de manière fixe et étroitement ajusté,
- l'assemblage pouvant se faire dans la longueur ou dans la largeur du boîtier, et ce, à l'infini, les boîtiers pouvant ainsi être assemblés et désassemblés à volonté comme avec les pièces d'un puzzle classique.

Selon une réalisation, un deuxième moyen d'assemblage en trois dimensions comporte au moins une charnière intégrée à au moins un des côtés du cadre permettant le pivotement d'un bord du côté du cadre par rapport au corps du boîtier et de former en fonction du besoin d'assemblage un angle entre 0° à 180° entre le bord du côté du cadre et le corps du boîtier, un nombre de côtés du cadre possédant une charnière intégrée étant déterminé en fonction des besoins d'assemblage en trois dimensions.

Selon une réalisation, le cadre comporte un évidement sur l'une de ses bordures internes permettant d'ouvrir aisément un couvercle dudit dispositif ou un couvercle du boîtier de stockage ou d'emballage de disque CD ou DVD ou VCD ou BD.

Selon une réalisation, le dispositif comporte à son dos une cavité afin de pouvoir accrocher le dispositif à une surface verticale.

Selon une réalisation, le cadre possède au moins une charnière intégrée à au moins un de ses côtés et chaque côté du cadre peut en posséder une, une charnière étant obtenue par l'évidement de matière dans la masse du cadre du boîtier formant une rainure axiale parallèle à un côté et allant d'une extrémité à l'autre du côté, la rainure axiale pouvant être creusée sur la face du cadre ou sur le dos du cadre ou bien pouvant être creusée dans le même plan sur la face et le dos du cadre à la fois.

Selon une réalisation, une rainure axiale parallèle à un côté du cadre et allant d'une extrémité à l'autre du côté est située dans l'espace définie entre la limite du contour de la forme du corps du boîtier et la limite extérieur du côté, la rainure pouvant traverser les parties femelles et les parties mâles formants les contours d'un côté.

Selon une réalisation, la profondeur ou la largeur ou la longueur ou la forme d'une rainure axiale qui forme une charnière est déterminée par rapport aux dimensions du côté du cadre du boîtier où elle est creusée pour ne laisser qu'une épaisseur fine de matière dans toute sa longueur. En outre, pour limiter la résistance de la matière restante qui forme la charnière, des trous de formes et de longueurs variées ou des trous oblongs peuvent y être creusés pour faciliter l'articulation du bord du cadre par rapport au corps du boîtier.

Selon une réalisation, une rainure axiale qui forme une charnière intégrée est de forme permettant le pivotement du bord du côté du cadre par rapport au corps du boîtier comme par exemple une rainure en Vé ou en Té ou en congé ou circulaire partielle ou droite ou bien en forme d'accordéon par la juxtaposition de plusieurs rainures axiales faciales et dorsales, les deux surfaces d'une même rainure pouvant être pourvues de tenons et de trous servant d'assemblage à queues droites, afin de permettre de maintenir un angle entre le bord du côté du cadre par rapport au corps de boîtier.

Selon une réalisation, le premier moyen d'assemblage peut utiliser des techniques d'assemblages, comme une rainure en Vé ou en Té pour la partie femelle et une languette en Vé ou en Té pour la partie mâle assurant une liaison glissière permettant à un boîtier de s'assembler de manière fixe et étroitement ajusté à un autre boîtier similaire dans sa longueur ou dans sa largeur, les boîtiers pouvant ainsi être assemblés et désassemblés à volonté comme avec les pièces d'un puzzle classique.

Selon une réalisation, des surfaces évidées des bords du cadre reliées au corps de boîtier qui forment le tracé du contour extérieur du cadre peuvent être comblées par des pièces de la forme des surfaces évidées pour obtenir des côtés droits ou pour modifier le tracé du contour extérieur du cadre ou pour servir de pièce intermédiaire entre deux boîtiers, le dispositif pouvant contenir dans sa masse des ergots ou des trous permettant de fixer des pièces de décoration tels que des stickers, des formes en reliefs ou des éléments de promotion.

Selon une réalisation, le dispositif possède un corps du boîtier qui peut être de dimensions variables et qui contient une rosace en son centre pour la fixation d'un disque CD ou DVD ou VCD ou BD.

Selon une réalisation, le dispositif comporte un couvercle relié au corps du boîtier par un mécanisme de charnière moulée ou à l'aide de deux ergots aux bordures du couvercle ou du corps du boîtier.

Selon une réalisation, le dispositif possède un corps du boîtier et un cadre de forme et de dimensions variables, le corps du boîtier pouvant être muni d'une butée de maintien étant destiné à recevoir un boîtier classique de CD ou de DVD ou de VDC ou de BD ne possédant pas les caractéristiques d'assemblage en deux ou trois dimensions du dispositif ou tout autre objet adapté aux dimensions du corps de boîtier.

Selon une réalisation, le dispositif possède un corps du boîtier plein sur lequel est fixé des plateaux pouvant être amovible ou fixe, et pouvant posséder une butée à leur extrémité, le deuxième plateau avec une butée ou pas pouvant être utilisé comme point de maintien de l'objet à exposer, les dimensions du plateau et des autres éléments du dispositif étant adaptées aux dimensions de l'objet à exposer, le dispositif étant destiné à la fonction de présentoir d'objets.

### Brève description des dessins

Les dessins annexés illustrent l'invention :
La figure 1 représente une vue de face d'un mode de réalisation du dispositif selon l'invention possédant un couvercle, une rosace, deux charnières intégrées creusées au dos du boîtier et un cadre au contour extérieur possédant des concavités et des convexités;
La figure 2 représente une vue de dessus d'un assemblage en trois dimensions d'une variante du dispositif de la figure 1 possédant des charnières intégrées creusées à la fois au dos et sur les faces des cadres de boîtiers;
La figure 3 représente une vue de face d'un autre mode de réalisation du dispositif selon l'invention possédant deux charnières creusées sur la face du cadre, sans couvercle ni de rosace et avec un corps de boîtier plein;
La figure 4 représente une vue de face d'un autre mode de réalisation du dispositif selon l'invention possédant un cadre de boîtier de forme hexagonale sans couvercle ni de rosace et deux charnières intégrées creusées au dos du boîtier;
La figure 5 représente une vue de dos un assemblage en deux dimensions d'une variante du dispositif de la figure 1 possédant des charnières intégrées traversant les concavités et les convexités formants les contours des cadres des boîtiers.

### Description des modes de réalisation

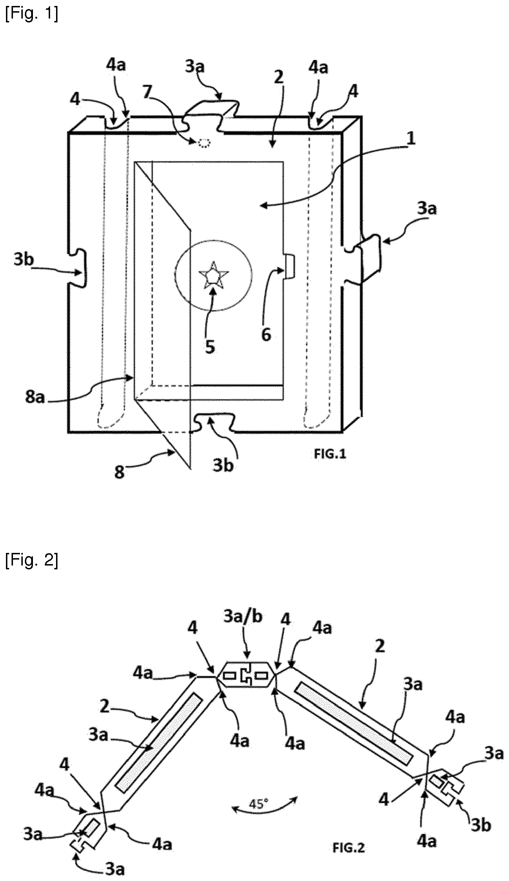

Selon le mode de réalisation représenté sur la figure 1, le dispositif comporte un corps de boîtier (1) dont les formats et les formes ne sont pas limitatifs. Le corps de boîtier (1) peut avoir la forme d'un cube ou d'un parallélépipède rectangle ou d'un prisme à base polygone. Ce corps de boîtier (1) contient une rosace (5) pour la fixation d'un CD ou DVD ou VCD ou BD. Un couvercle (8) est relié au corps de boîtier (1) par un mécanisme de charnière moulée (8a) ou à l'aide de deux ergots aux bordures du couvercle (8) ou du corps du boîtier (1). Un cadre (2) relié au corps de boîtier (1) au niveau de son périmètre, de forme et de dimensions variables, donne la forme au dispositif. Ce cadre (2) peut comporter un évidement (6) sur l'une de ses bordures internes permettant d'ouvrir aisément le couvercle (8). Le cadre (2) peut aussi comporter à son dos une cavité (7) afin de pouvoir accrocher le dispositif à une surface verticale comme pour un cadre de tableau. De même qu'un ensemble de boîtiers assemblés en deux dimensions formant une unité d'ensemble peut être accrochée comme un cadre classique à toutes surfaces verticales à l'aide des cavités (7) au dos des boîtiers formant l'unité d'ensemble.

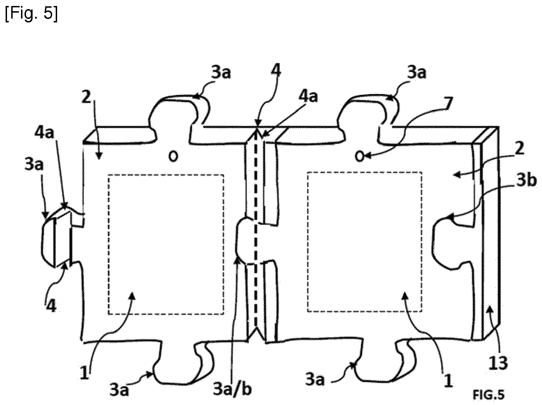

Le boîtier dispose d'un premier moyen d'assemblage qui permet d'assembler plusieurs boîtiers à la façon d'un puzzle classique en deux dimensions (3a/b, Fig. 5). Un deuxième moyen d'assemblage en association avec le premier moyen d'assemblage permet d'assembler plusieurs boîtiers pour former un ensemble de boîtiers en trois dimensions (Figure 2).

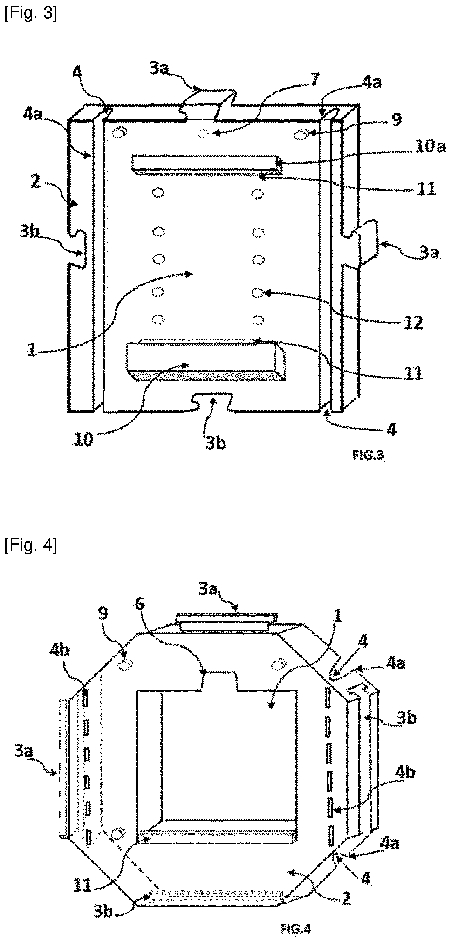

Le premier moyen d'assemblage, comme pour les pièces de puzzle classique, est caractérisé en ce que le tracé du contour extérieur du cadre (2) possède des concavités ou parties femelles (3b) et des convexités ou parties mâles (3a) réalisées de telle sorte que les parties mâles (3a) sont de formes différentes ou identiques mais de forme complémentaire à leur parties femelles respectives (3b) d'un autre boîtier permettant un assemblage de deux boîtiers de manière fixe et étroitement ajustée (3a/b, Fig. 5). Le premier moyen d'assemblage peut utiliser d'autres techniques d'assemblages, comme une rainure en Vé ou en Té pour la partie femelle (3b, Fig. 4) et une languette en Vé ou en Té pour la partie mâle (3a, Fig. 4) assurant une liaison glissière ou bien toutes autres techniques permettant à un boîtier de s'assembler de manière fixe et étroitement ajustée à un autre boîtier similaire dans sa longueur ou dans sa largeur. Le premier moyen d'assemblage permet donc d'assembler un boîtier à un autre boîtier dans sa longueur ou dans sa largeur (3a/b, Fig. 5), et ce, à l'infini. Les boîtiers peuvent ainsi être assemblés et désassemblés à volonté comme avec les pièces d'un puzzle classique.

Le deuxième moyen d'assemblage permettant l'assemblage en trois dimensions est caractérisé en ce que le cadre (2) possède au moins une charnière intégrée (4) à au moins un des côtés du cadre (2) permettant le pivotement du bord du côté du cadre (2) par rapport au corps de boîtier (1) et de former en fonction du besoin d'assemblage un angle entre 0° à 180° entre le bord du côté du cadre (2) et le corps du boîtier (1). La figure 2 représente une vue de dessus d'un assemblage de deux boîtiers agencés dans l'espace en formant un angle de 45°. Les deux cotés utilisés pour fixer (3a/b) les deux boîtiers forment chacun un angle obtus avec leur propre corps de boîtier (2) à l'aide de leur charnière (4), permettant d'obtenir cet agencement dans l'espace. Quelle que soit la forme de réalisation du dispositif, le dispositif possède au moins une charnière intégrée (4) à au moins un des côtés du cadre (2) et le nombre de côtés du cadre (2) possédant une charnière intégrée (4) est déterminé en fonction des besoins d'assemblage en trois dimensions.

Une charnière est obtenue par l'évidement de matière dans la masse du cadre (2) du boîtier formant une rainure axiale (4a) parallèle à un côté et allant d'une extrémité à l'autre du côté. La rainure axiale (4a) peut être creusée sur la face du cadre (Fig.3) ou sur le dos du cadre (Fig.1) ou bien une rainure axiale (4a) peut être creusée dans le même plan sur la face et le dos du cadre (2) à la fois (Fig.2).

La profondeur ou la largeur ou la longueur ou la forme d'une rainure axiale (4a) est déterminée par rapport aux dimensions du côté du cadre (2) du boîtier où elle est creusée pour ne laisser qu'une épaisseur fine de matière dans toute sa longueur. Une rainure axiale (4a) peut inclure des trous de formes et de longueurs variées (4b, Fig.4) ou de trous oblongs afin de limiter la résistance de la charnière et ainsi faciliter l'articulation du bord du cadre (2). Une rainure axiale (4a) est située dans l'espace défini entre la limite du contour de la forme du corps du boîtier (1) et la limite extérieure du côté du cadre (2). Pour des raisons techniques ou d'esthétismes, une rainure axiale (4a) peut traverser les concavités (3b) et les convexités (3a) formants les contours d'un côté (Fig.5). Une rainure axiale (4a) peut être de formes variées comme par exemple une rainure en Vé ou en Té (3a, 3b, Fig. 4) ou en congé ou circulaire partielle ou droite ou bien en forme d'accordéon par la juxtaposition de plusieurs rainures axiales faciales et dorsales. Les deux surfaces d'une même rainure peuvent être pourvues de tenons et de trous servant d'assemblage à queues droites, afin de permettre de maintenir un angle entre le bord du côté du cadre par rapport au corps de boîtier.

Dans la forme de réalisation préférée du dispositif, les rainures axiales qui forment les charnières intégrées sont suffisamment éloignées des bords afin de ne pas traverser les concavités (3b) et les convexités (3a) formants les contours du boîtier (Fig. 1, 2, 3 et 4).

Les surfaces évidées des bords du cadre (2) qui forment le tracé du contour extérieur du cadre (2) comme par exemple des languettes ou des rainures ou des concavités (3b) ou des convexités (3a) peuvent être comblées par des pièces (13, Fig. 5) de la forme des surfaces évidées pour obtenir des bordures de côtés droits ou pour modifier le tracé du contour extérieur du cadre ou pour servir de pièce intermédiaire entre deux boîtiers. De plus, le dispositif peut contenir dans sa masse des ergots (9) ou des trous permettant de fixer des pièces de décoration tels que des stickers, des formes en reliefs ou des éléments de promotion.

Sans sortir du cadre de l'invention, dans une des formes de réalisation selon la figure 4, le corps du boîtier (1) ne possède pas de couvercle relié au corps de boîtier, ni de rosace au centre du corps de boîtier et peut être muni d'une butée (11) afin de maintenir un objet. Pour des raisons d'adaptation aux dimensions de l'objet à exposer ou d'esthétismes, le contour extérieur du corps du boîtier (1) ou du cadre (2) peut être de formes géométriques variées ou représentant un polygone. Le dispositif dans ce mode de réalisation sans couvercle ni rosace est particulièrement destiné à recevoir un boîtier classique de CD ou de DVD ou de VDC ou de BD ne possédant pas les moyens d'assemblage en deux ou trois dimensions du dispositif selon l'invention ou tout autre objet adapté aux dimensions du corps de boîtier. Ainsi, le dispositif peut être assemblé et désassemblé à volonté comme pour un puzzle classique en deux ou trois dimensions. Dans ce mode de réalisation, l'évidement (6) permet de faciliter l'ouverture du couvercle du boîtier de stockage ou d'emballage de disque CD ou DVD ou VCD ou BD.

De la même manière, sans sortir du cadre de l'invention, dans une autre forme de réalisation selon la figure 3 le corps du boîtier (1, Fig. 3) est plein, ne possède pas de couvercle relié au corps de boîtier, ni de rosace au centre du corps de boîtier. Un plateau (10) est fixé perpendiculairement à la face du corps du boîtier (1). Le plateau (10) peut être fixe et former une seule pièce avec le plateau (10) ou être amovible en utilisant la technique associant des ergots et trous (12) pour la fixation au plateau (10), et peut ou pas posséder une butée à son extrémité (11) afin de maintenir un objet. Les dimensions du plateau et du dispositif sont adaptées à l'objet à exposer. Un deuxième plateau (10a) avec une butée (11) ou pas, peut être utilisé comme point de maintien de l'objet à exposer. Dans cette forme de réalisation, le dispositif est particulièrement adapté à la fonction de présentoir d'objets. Les boîtiers peuvent ainsi être assemblés et désassemblés à volonté comme pour un puzzle classique en deux ou trois dimensions.

Le dispositif dans les différentes formes de réalisations présenté ci-dessus, peut être fait en une pièce en matière plastique moulée. Le dispositif peut être en résine ou de toute matière plastique transparente ou teinté ou opaque ou nacré ou phosphorescent ou fluorescent ou avec des motifs holographiques ou grené ou avec des motifs en creux. Le dispositif peut être sérigraphié ou posséder des adhésifs représentant des textes, des graphismes ou des visuels.

Bien que seules trois versions de l'invention aient été présentées et décrites, il sera compris que diverses modifications et changements dans la forme et dans des détails peuvent y être apportés sans s'éloigner de l'esprit et de l'étendue de l'invention.

Le dispositif selon l'invention est particulièrement destiné aux professionnels de la grande distribution, aux éditeurs de musique ou de films ou de jeux ou de livres pour la promotion de leurs produits, mais aussi aux particuliers pour la mise en valeur et le rangement domestique de leurs collections de disques CD ou DVD ou VCD ou BD ou livre.

## Revendications

1. Dispositif qui concerne une nouvelle conception d'un boîtier de stockage ou d'emballage de disque CD ou DVD ou VCD ou BD qui peut être assemblé à d'autres boîtiers similaires comme des pièces d'un puzzle classique en deux dimensions ou trois dimensions **caractérisé en ce qu'**il comporte :
- un corps du boîtier (1) qui peut être de dimensions variables,
- un cadre (2) relié au corps du boîtier (1) au niveau de son périmètre, de forme et de dimensions variables qui donne la forme au dispositif,
- un premier moyen d'assemblage en deux dimensions comportant des parties femelles (3b) et des parties mâles (3a) réalisées suivant le tracé d'un contour extérieur du cadre (2), de telle sorte que les parties mâles (3a) sont de formes différentes ou identiques mais de forme complémentaire à leur parties femelles respectives (3b) d'un autre boîtier permettant un assemblage de manière fixe et étroitement ajusté,
- l'assemblage pouvant se faire dans la longueur ou dans la largeur du boîtier, et ce, à l'infini, les boîtiers pouvant ainsi être assemblés et désassemblés à volonté comme avec les pièces d'un puzzle classique.

2. Dispositif selon la revendication 1, **caractérisé en ce qu'**il comporte un deuxième moyen d'assemblage en trois dimensions comportant au moins une charnière intégrée (4) à au moins un des côtés du cadre (2) permettant le pivotement d'un bord du côté du cadre (2) par rapport au corps du boîtier (1) et de former en fonction du besoin d'assemblage un angle entre 0° à 180° entre le bord du côté du cadre (2) et le corps du boîtier (1), un nombre de côtés du cadre (2) possédant une charnière intégrée (4) étant déterminé en fonction des besoins d'assemblage en trois dimensions.

3. Dispositif selon la revendication 1 ou 2, **caractérisé en ce que** le cadre (2) comporte un évidement (6) sur l'une de ses bordures internes permettant d'ouvrir aisément un couvercle (8) dudit dispositif ou un couvercle du boîtier de stockage ou d'emballage de disque CD ou DVD ou VCD ou BD.

4. Dispositif selon l'une quelconque des revendications 1 à 3, **caractérisé en ce qu'**il peut comporter à son dos une cavité (7) afin de pouvoir accrocher le dispositif à une surface verticale.

5. Dispositif selon la revendication 2, **caractérisé en ce que** le cadre (2) possède au moins une charnière intégrée (4) à au moins un de ses côtés et que chaque côté du cadre (2) peut en posséder une, une charnière étant obtenue par l'évidement de matière dans la masse du cadre (2) du boîtier formant une rainure axiale (4a) parallèle à un côté et allant d'une extrémité à l'autre du côté, la rainure axiale (4a) pouvant être creusée sur la face du cadre (2) ou sur le dos du cadre (2) ou bien pouvant être creusée dans le même plan sur la face et le dos du cadre (2) à la fois.

6. Dispositif selon la revendication 5, **caractérisé en ce qu'**une rainure axiale parallèle à un côté du cadre (2) et allant d'une extrémité à l'autre du côté est située dans l'espace définie entre la limite du contour de la forme du corps du boîtier (1) et la limite extérieur du côté, la rainure pouvant traverser les parties femelles (3b) et les parties mâles (3a) formants les contours d'un côté.

7. Dispositif selon la revendication 5 ou 6, **caractérisé en ce que** la profondeur ou la largeur ou la longueur ou la forme d'une rainure axiale (4a) qui forme une charnière est déterminée par rapport aux dimensions du côté du cadre (2) du boîtier où elle est creusée pour ne laisser qu'une épaisseur fine de matière dans toute sa longueur et **en ce que** pour limiter la résistance de la matière restante qui forme la charnière, des trous de formes et de longueurs variées (4b) ou des trous oblongs peuvent y être creusés pour faciliter l'articulation du bord du cadre (2) par rapport au corps du boîtier.

8. Dispositif selon l'une quelconque des revendications 5 à 7, **caractérisé en ce que** une rainure axiale (4a) qui forme une charnière intégrée (4) est de forme permettant le pivotement du bord du côté du cadre (2) par rapport au corps du boîtier (1) comme par exemple une rainure en Vé ou en Té ou en congé ou circulaire partielle ou droite ou bien en forme d'accordéon par la juxtaposition de plusieurs rainures axiales faciales et dorsales, les deux surfaces d'une même rainure pouvant être pourvues de tenons et de trous servant d'assemblage à queues droites, afin de permettre de maintenir un angle entre le bord du côté du cadre par rapport au corps de boîtier.

9. Dispositif selon l'une quelconque des revendications 1 à 8, **caractérisé en ce que** le premier moyen d'assemblage (3a, 3b) peut utiliser des techniques d'assemblages, comme une rainure en Vé ou en Té pour la partie femelle et une languette en Vé ou en Té pour la partie mâle assurant une liaison glissière permettant à un boîtier de s'assembler de manière fixe et étroitement ajusté à un autre boîtier similaire dans sa longueur ou dans sa largeur, les boîtiers pouvant ainsi être assemblés et désassemblés à volonté comme avec les pièces d'un puzzle classique.

10. Dispositif selon l'une quelconque des revendications 1 à 9, **caractérisé en ce que** des surfaces évidées des bords du cadre (2) reliées au corps de boîtier qui forment le tracé du contour extérieur du cadre (2) peuvent être comblées par des pièces (13) de la forme des surfaces évidées pour obtenir des côtés droits ou pour modifier le tracé du contour extérieur du cadre ou pour servir de pièce intermédiaire entre deux boîtiers, le dispositif pouvant contenir dans sa masse des ergots (9) ou des trous permettant de fixer des pièces de décoration tels que des stickers, des formes en reliefs ou des éléments de promotion.

11. Dispositif selon l'une quelconque des revendications 1 à 10, **caractérisé en ce que** le dispositif possède un corps du boîtier (1) qui peut être de dimensions variables et qui contient une rosace (5) en son centre pour la fixation d'un disque CD ou DVD ou VCD ou BD.

12. Dispositif selon l'une quelconque des revendications 1 à 11, **caractérisé en ce qu'**il comporte un couvercle (8) relié au corps du boîtier (1) par un mécanisme de charnière moulée (8a) ou à l'aide de deux ergots aux bordures du couvercle (8) ou du corps du boîtier (1).

13. Dispositif selon l'une quelconque des revendications 1 à 12, **caractérisé en ce que** le dispositif possède un corps du boîtier (1) et un cadre (2) de forme et de dimensions variables, le corps du boîtier (1) pouvant être muni d'une butée de maintien (11) étant destiné à recevoir un boîtier classique de CD ou de DVD ou de VDC ou de BD ne possédant pas les caractéristiques d'assemblage en deux ou trois dimensions du dispositif ou tout autre objet adapté aux dimensions du corps de boîtier.

14. Dispositif selon l'une quelconque des revendications 1 à 13, **caractérisé en ce que** le dispositif possède un corps du boîtier plein (1) sur lequel est fixé des plateaux (10 et 10a) pouvant être amovibles ou fixes, et pouvant posséder une butée (11) à leur extrémité, le deuxième plateau (10a) avec une butée (11) ou pas pouvant être utilisé comme point de maintien de l'objet à exposer, les dimensions du plateau et des autres éléments du dispositif étant adaptées aux dimensions de l'objet à exposer, le dispositif étant destiné à la fonction de présentoir d'objets.
